# EUROPEAN PATENT SPECIFICATION

(11) **EP 2 255 286 B1**
(45) Date of publication and mention of the grant of the patent: **10.08.2016**
(21) Application number: 09716163.2
(22) Date of filing: 28.01.2009
(51) Int. Cl.: H04L 29/08, G06F 9/48, G06F 9/50

(54) **ROUTING WORKLOADS AND METHOD THEREOF**
WEITERLEITUNG VON ARBEITSLASTEN UND VERFAHREN DAFÜR
ROUTAGE DE CHARGES DE TRAVAIL ET PROCÉDÉ APPARENTÉ

(30) Priority: 26.02.2008 EP 08151917
(43) Date of publication of application: 01.12.2010
(73) Proprietor: International Business Machines Corporation, Armonk, NY 10504 (US)
(72) Inventor: NEUBAUER, Meik, 71034 Boeblingen (DE); VAUPEL, Robert, 72108 Rottenburg (DE); SCHLINKMANN, Verena, 45731 Waltrop (DE)
(74) Representative: Kuisma, Sirpa Tuulikki
(86) International application number: PCT/EP2009/050914
(87) International publication number: WO 2009/106398

(56) References cited:
- WO-A-01/13228
- US-A1- 2007 143 460

## Description

### Technical field

The invention relates to a method of calculating a routing workload in a workload manager and to a computer program product.

### Background and related art

Mainframes are computers used mainly by large organizations for critical application and processing of great amounts of data, as e.g. financial transaction processing. Mainframes are highly redundant for providing reliable and secure systems. Mainframes are able to run or host multiple operating systems and therefore may replace the use of dozens of smaller servers, reducing management and providing improved scalability. Modern mainframes include the IBM zSeries and System z9 servers.

A parallel sysplex is a cluster of IBM mainframes acting together as a single system image, using z/OS. A sysplex uses parallel processing and enables read/write data sharing across multiple systems with full data integrity, in order to cluster up to 32 systems and share a workload across the systems. The workload can be dynamically distributed across individual processors within a system, as well as to any system in a cluster having available resources. Workload balancing also permits to run diverse applications across a parallel sysplex cluster, while maintaining a critical response level. If the workload balancing or workload routing is not done correctly, an overload in the system may occur.

Therefore a method of efficiently calculating a dispatcher's share in a workload manager, a workload manager and a computer program product adapted for performing the method in accordance with the invention is needed.

WO0113228 discusses application server load balancing. Requests may be mapped from client computers to a set of application servers in a cluster. Different load balancing methods and criteria may be used, such as client computers making the load balancing decisions or the load balancing decisions being made by load balancing services running on the application server computers. A variety of load balancing criteria may be used, such as server load factors such as CPU load, disk input/output rate, number of requests queued, etc. US2007/143460 discusses load-balancing metrics for adaptive dispatching of long asynchronous network requests. Load-balancing in a data network involves a network dispatcher for assigning each new request to a selected server. The servers generate metrics indicative of their currently assigned workloads, and the network dispatcher allocates requests according to weighted server probabilities reflecting the servers' capabilities and the metrics.

### Summary of the invention

The invention is set out as in independent method claim 1, corresponding computer program product claim 6 and corresponding system claim 7. The present invention provides a method of calculating, in a workload manager, a dispatcher's share (D) of the relative amount of workload items a dispatcher should receive, the workload manager coupled to an arbitrator, the arbitrator coupled to a plurality of systems, each system comprising a dispatcher, each dispatcher coupled to a plurality of execution units, the arbitrator being adapted for receiving and distributing a flow of workload items to the dispatchers, the execution units being adapted for executing the workload items, the workload items being of at least a first, a second and a third type, the method comprising the steps of: reading a total of service units (W) for each workload type across the plurality of systems from a memory, the service units being a value for measuring CPU consumption in a time interval; reading a capacity (cap) value for each workload type on each system (SYS) of the plurality of systems from the memory, the capacity value being indicative of a maximum of service units that a system can execute in the time interval.

The method further comprises: calculating a first, second and third dispatcher's relative share (R) by dividing the capacity of each workload type on each system by the total of service units of each workload type and obtaining the minimum value of the dispatcher's relative share of each system; calculating a relative queue length (V) for each system by dividing a queue length (q) of the workload items for each workload type on each system by the capacity of each workload type on each system; calculating the dispatcher's share (D) for each system by combining the minimum value and a first function of a maximum of the relative queue length using an arithmetic operation.

The dispatcher's share refers to the dispatcher's share to all routing, that is the share of workload that all dispatchers receive from the arbitrator. The dispatcher's relative share refers to the dispatcher's relative share of smallest relative execution capacities.

The first function of the relative queue length of the method comprises calculating an inverse value of one plus a maximum of the relative queue length. The arithmetic operation is a multiplication. The first, second and third workload type are general CPU (CP), z Application Assist Processor (zAAP) and z9 Integrated Information Processor (zIIP). The dispatcher's share is normalized by dividing the dispatcher's share by an addition of all dispatcher's shares of all systems.

The minimum value of the method is normalized by dividing the minimum value by an addition of all minimum value of all systems. The arbitrator distributes the flow of workload items to other dispatchers in other systems.

One of the advantages of the embodiments is that the queues in the dispatchers and the execution units do not grow to infinity as a result of capacity shortage or an outage of an execution unit, as long as the total sysplex capacity still exceeds the total workload demand for every workload type. For these cases, the dispatcher's share of all routings to each system depend on the queue length relative to its capacity on any processor and the relative value of the total of services unity of a workload type by its capacity. In the case of an outage of an execution unit on one system, it is possible to compensate it by distributing the workload to other systems without resulting in an overflow of or congestion of resources in the other systems. Another advantage is that the dispatcher's share calculation is independent of the initial workload distribution and the algorithm converges to an optimal workload distribution.

In another aspect, the invention relates to a computer program product stored on a computer usable medium, comprising computer readable program means for causing a computer to perform a method according to the invention when said program is run on said computer.

In another aspect, the invention relates to a data processing system for workload management operable to perform according to any of the preceding embodiments.

### Brief description of the drawings

In the following preferred embodiments of the invention are described in greater detail by way of example only making reference to the drawings in which:
- Fig. 1: shows a block diagram of a first sysplex according to an embodiment of the invention,
- Fig. 2: shows a block diagram of a plurality of interconnected systems forming a sysplex according to an embodiment of the invention,
- Fig. 3: shows a flow chart of a method of calculating a dispatcher's share according to an embodiment of the invention,
- Fig. 4: shows a block diagram of the calculation of the workload manager in accordance with an embodiment of the invention.

### Detailed description

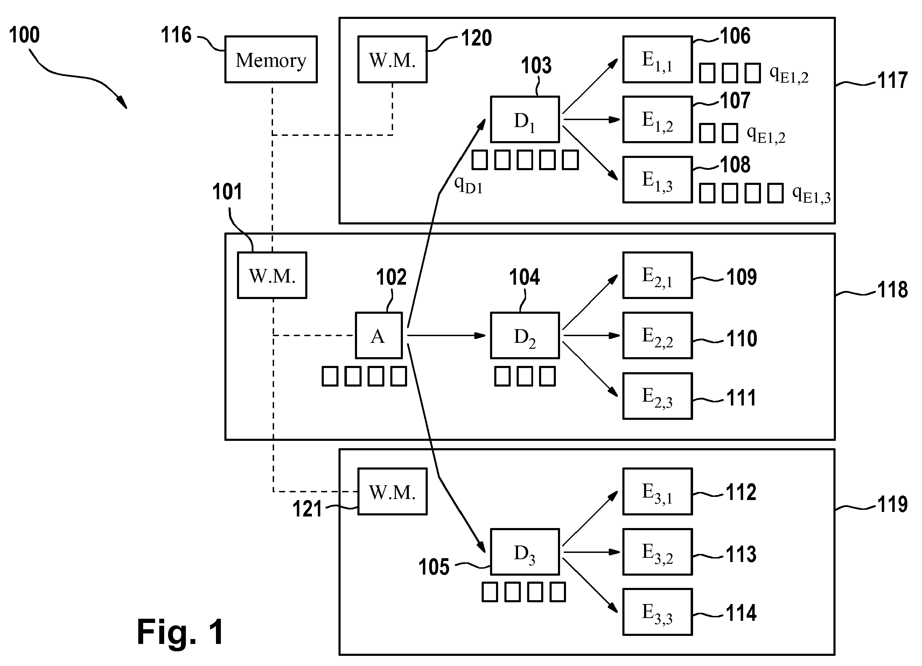

Fig. 1 shows an example 100 comprising a first system 118 with a first workload manager 101 coupled to an arbitrator 102; the arbitrator coupled to a first, a second and a third dispatcher 103-105, each dispatcher coupled to three execution units 106-114. The first workload manager 101 is coupled to another two workload managers 120-121. The first dispatcher 103 is located in a second system 117 and is coupled to the execution units 106-108, the dispatcher 104 is located in the first system 118 and is coupled to the three execution units 109-111, and the third dispatcher 105 is located in the third system 119 and is coupled to another three execution units 112-114. A memory 116 is coupled to the workload manager 101.

An arbitrator 102 receives incoming workload items 115 and routes them to dispatching units 103-105. Each dispatcher determines the workload type of the workload items and routes them to specialized execution units 106-114. The queue length of the plurality of workload items can be measured for each dispatcher and each execution unit. For example the dispatcher 103 has a queue length (q_{D1}) of five workload items and the execution unit 106 has a queue length (q_{E1,1}) of three workload items. There is no need to measure the queue lengths for all dispatchers or execution units. The only prerequisite of the embodiment of the invention is that at least one stage of the routing behind the arbitrator the queues are measured.

Each workload item requires a different CPU consumption of an execution unit in a time interval, and that consumption is not known in advance by the arbitrator, so that the assignment of the plurality of workload items 115 to the dispatchers does not depend on the size of each workload item or its CPU consumption. The workload type of each workload item is identified by the dispatchers, and the size of the workload items is identified either by the dispatcher or by the execution units. As the arbitrator does not know in advance the workload type of the workload items and the size of the workload items, a wrong algorithm may cause a queue to grow to infinity. The workload managers 101,120-121 of all systems are connected and constantly interact and communicate the capacity and workload values of its systems. The memory 116 stores the values of total of services units of all workload types across the plurality of systems and the capacity value of all workload types of each system.

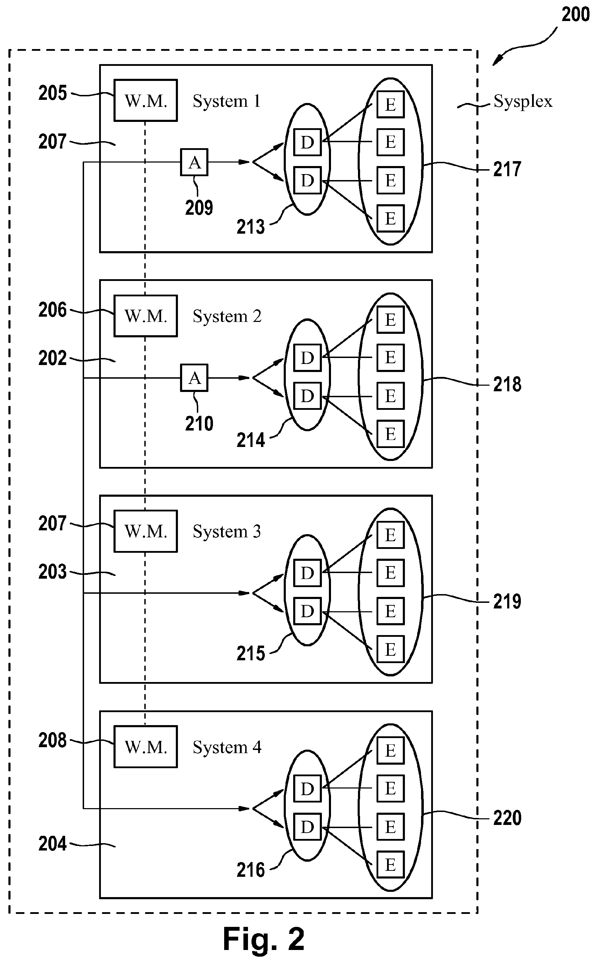

Fig. 2 shows an example of a Sysplex 200 that is formed by a plurality of interconnected systems including a first, second, third and fourth system 201-204. Each system includes a workload manager 205-208, all workload managers 205-208 are coupled to each other. The workload managers 205-206 are coupled to the arbitrators 209-210. Alternatively, it is sufficient to have one arbitrator in the whole sysplex. The arbitrators 209-210 are coupled to a plurality of dispatchers 213-216 and each dispatcher 213-216 is coupled as well to a plurality of execution units 217-220. Not every system requires an arbitrator, as the arbitrator may route the workload to any system in the sysplex.

Each workload manager 205-208 processes the routing algorithm that calculates the dispatcher's share of the relative amount of workload items a dispatcher should receive. The arbitrators 209-210 do not know the workload type or workload size and receive the routing recommendations from the workload manager 205-208 and distribute the workload items according to the results of the algorithm. The dispatchers 213-216 are also known as queue managers and receive the workload items from the arbitrators 209-210 and queue them until they are fetched by the execution units 217-220, also called servers. The execution units 217-220 execute the workload items, read the workload type and decide what processor is able to process the workload item. The workload types may be of three or more types including general CPU (CP), z Application Assist Processor (zAAP) and z9 Integrated Information Processor (zIIP). A different processor is used for each workload type. The workload managers across all the systems are coupled in order to receive the information related to the dispatcher status across all the systems.

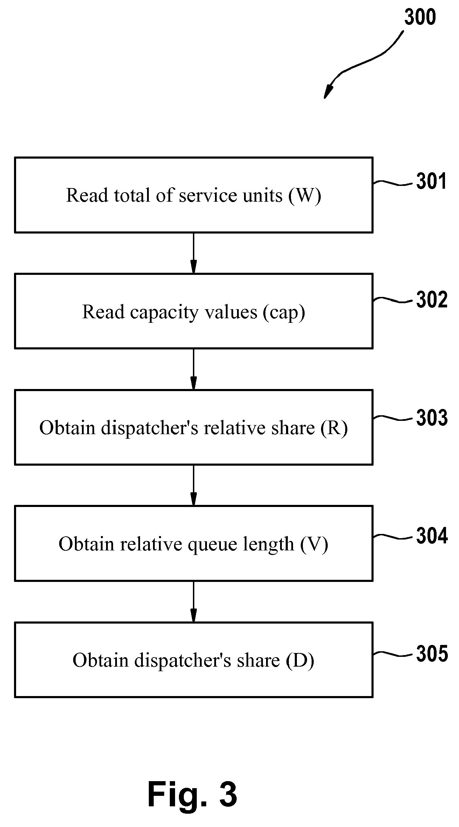

Fig. 3 shows a flow diagram 300 of the method of calculating a dispatcher's share (D) in a workload manager. The first step 301 comprises obtaining a total of service units for each workload type across the plurality of systems in the time interval in progress. The service units are a value that measures the CPU consumption in a time interval. The total of service units includes a value for the first workload type, a second and third values for the second and third workload types. Further workload types may also be available in the system, with a further corresponding total of service units.

The second step 302 includes obtaining a capacity value for each workload type, including the first, second and third workload type on each system of the plurality of systems. The capacity measures the maximum amount of service units that a system is capable of executing in a time interval. A Different capacity value is obtained for each workload type and for each system, so that each system will include a capacity value for each workload type.

The flow diagram 300 further comprises a third step 303 for calculating a dispatcher's relative share, that is obtained by dividing the capacity for each workload type on each system by the total of service units for each workload type. The obtained capacity for each workload type on each system is divided by the total of service units of the same workload type and the minimum value corresponds to the dispatcher's relative share of each system. On the third step 303 a single value is obtained for each system. The forth step 304 comprises calculating a relative queue length from each system by dividing a queue length of the workload items for each workload type on each system by the capacity of each workload type on each system, each system obtaining a value for each workload type. The fifth step 305 calculates the dispatcher's share (D) for each system by combining the minimum value and a first function of the relative queue length using an arithmetic operation.

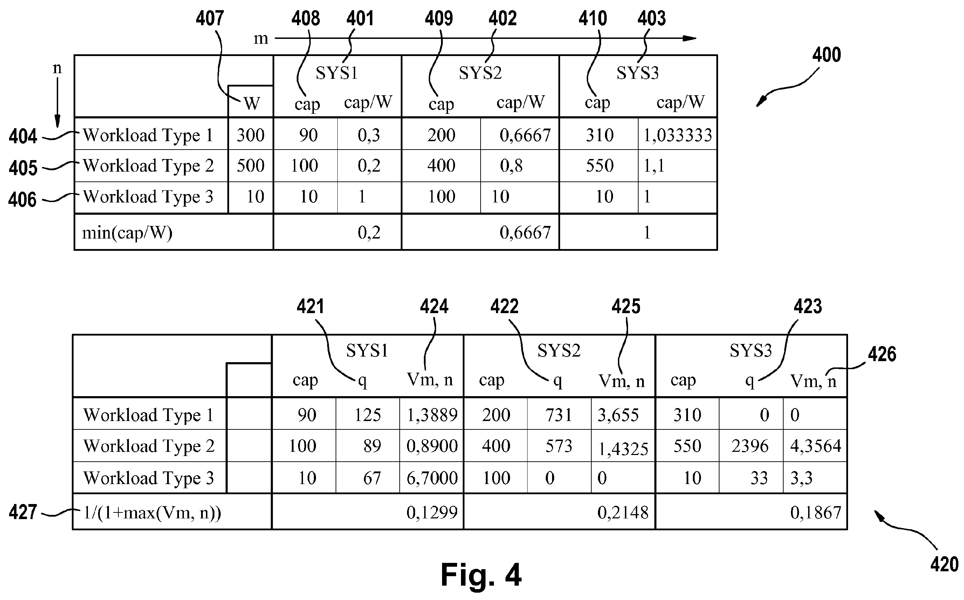

Fig. 4 shows an example of a calculation of the dispatcher's share for distributing a flow of workload items across a plurality of dispatchers. The table comprising three systems 401-403, a first workload type 404, a second 405 and a third workload type 406; a total of service units 407, a plurality of capacities on each system, the first plurality of capacities 408 on the first system 408, the second plurality of capacities 409 on the second system 409 and the third plurality of capacities 410 on the third system 410. The second table 420 further comprises a plurality of queue lengths of each workload type and on each system 421-423, a calculated relative queue length on each system and for each workload type 424-426 and a function of the relative queue length for each workload type on each system 427.

One of the first steps for calculating a dispatcher's share in a workload manager includes obtaining the values for the total of service units 407 of each workload type across all the systems 401-403. In this example, the total of service units on the first system 401 for the first workload type is 300, the total of service units for the second workload type is 500 and the third total of service units for the third workload type is 10.

Another step includes obtaining a capacity value of each system 408-410 and workload type. For example, on the first system 401 the capacity of the first workload type is 90, the capacity of the second workload type is 100 and the capacity for the third workload type is 10. On the second system 402, the capacity for the first workload type is 200, the capacity for the second workload type is 400 and the capacity for the third workload type is 100. After the capacities are obtained for all the systems, a dispatcher's relative share may be calculated on each system and for each workload type.

On the first system 401, a first workload a system is able to process 411 is obtained by dividing the capacity of the first workload type, corresponding to '90', by the total of service units of the first workload type, corresponding to '300', resulting on '0.3'. The second capacity of the second workload type, with a value of '100', is divided by the total of service units of the second workload type, with a value of '500', resulting in a second workload a system is able to process of '0.2'. This value refers to the actual workload in percentage that a system is able to process. The same process is repeated for the third system that results in '1' and the same is repeated across all the systems obtaining three different values for each system.

Another step of the method of calculating a dispatcher's share includes calculating the minimum value of the previously obtained dispatcher's relative share. For example on the first system there are three values of the dispatcher's relative share, which are '0.3', '0.2' and '1'; the minimum value of these three values is '0.2'. For the second system, the minimum value is '0.6' and on the third system the minimum value of the dispatcher's relative share is '1'.

The second table 420 shows an example of the following steps that comprises the method of calculating a dispatcher's share that includes calculating the relative queue length 424-426 by dividing a queue length by the capacity for a specific workload type. On the first system 401 and for the first workload type the queue length is '125'; the queue length for the second workload type is '89' and the third queue length for the third workload type is '67'. The first relative queue length of the first system is obtained by dividing '125' by '90', obtaining '1.388'; and the second relative queue length is obtained by dividing '89' by '100', obtaining '0.89'. The same process is repeated for all queue lengths of all workload types across all the systems, so that the third relative queue length of the first system is '6.7'.

The table 420 further comprises a first function of the relative queue length that includes obtaining the inverse value of one plus the maximum relative queue length. On the first system 401 the maximum relative queue length is '6.7', so that the inverse of that value plus 1 is '0.12987'. On the second system, the highest relative queue length is '3.655', so that the inverse of one plus the value is '0.214'; and for the third system the maximum relative queue length is '4.356' and the inverse value of the maximum queue length is '0.186'. When all these values are calculated, the dispatcher's share is obtained by multiplying the minimum value of a dispatcher's relative share of each system by the first function value of each system, so that for the first system the '0.2' is multiplied by '0.129', obtaining '0.0259'; and for the second system the '0.66' is multiplied by '0.214'.

Finally, for the third system '1' is multiplied by '0.18'. These three values indicate the dispatcher's share for each system, so that the arbitrator can route a different amount of workload units for each dispatcher, so that the best possible distribution of the workload items is obtained across all the dispatchers and for all the systems. After a predefined, fixed time interval the calculation is repeated, taking into account any changes in the workload W, the capacities and queue lengths and thus adjusting the dispatchers' shares to new optimal values.

The invention can take the form of an entirely hardware embodiment, an entirely software embodiment or an embodiment containing both hardware and software elements. In a preferred embodiment, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output or I/O devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

While the foregoing has been with reference to particular embodiments of the invention, it will be appreciated by those skilled in the art that changes in these embodiments may be made without departing from the scope of the invention that is defined by the appended claims.

**List of Reference Numerals**

| | |
|---|---|
| 100 | Block diagram |
| 101 | Workload manager |
| 102 | Arbitrator |
| 103 | First dispatcher |
| 104 | Second dispatcher |
| 105 | Third dispatcher |
| 106 | Execution unit |
| 107 | Execution unit |
| 108 | Execution unit |
| 109 | Execution unit |
| 110 | Execution unit |
| 111 | Execution unit |
| 112 | Execution unit |
| 113 | Execution unit |
| 114 | Execution unit |
| 115 | Workload items |
| 200 | Sysplex |
| 201 | System 1 |
| 202 | System 2 |
| 203 | System 3 |
| 204 | System 4 |
| 205 | Workload manager |
| 206 | Workload manager |
| 207 | Workload manager |
| 208 | Workload manager |
| 209 | Arbitrator |
| 210 | Arbitrator |
| 211 | Arbitrator |
| 212 | Arbitrator |
| 213 | Dispatchers |
| 214 | Dispatchers |
| 215 | Dispatchers |
| 216 | Dispatchers |
| 217 | Execution units |
| 218 | Execution units |
| 219 | Execution units |
| 220 | Execution units |
| 300 | Flow chart |
| 301 | First step |
| 302 | Second step |
| 303 | Third step |
| 304 | Forth step |
| 305 | Fifth step |
| 306 | Sixth step |
| 400 | First table |
| 401 | System 1 |
| 402 | System 2 |
| 403 | System 3 |
| 404 | CP |
| 405 | Second workload type |
| 406 | Third workload type |
| 407 | Total of service units |
| 408 | Capacity |
| 409 | Capacity |
| 410 | Capacity |
| 420 | Second table |
| 421 | Queue length |
| 422 | Queue length |
| 423 | Queue length |
| 424 | Relative share |
| 425 | Relative share |
| 426 | Relative share |
| 427 | Function of relative share |

## Claims

1. A method (300) of calculating, in a workload manager (101), a dispatcher's share (D) of the relative amount of workload items a dispatcher should receive, said workload manager (101) coupled to an arbitrator (102), said arbitrator (102) coupled to a plurality of systems (117-119), each system comprising a dispatcher (103), each dispatcher (103) coupled to a plurality of execution units (106-114), said arbitrator (102) being adapted for receiving and distributing a flow of workload items (115) to said dispatchers (103-105), said execution units (106-114) being adapted for executing said workload items (115), said workload items (115) being of at least a first, a second or a third type, said method comprising the steps of:
reading (301) a total of service units (W, 407) for each workload type across said plurality of systems (117-119) from a memory (116), said service units being a value for measuring CPU consumption in a time interval;
reading (302) a capacity (cap, 408, 409, 410) value for each workload type on each system (SYS) of said plurality of systems (117-119) from said memory, said capacity value being indicative of a maximum of service units that a system can execute in said time interval;
calculating (303) a first, second and third dispatcher's relative share (R) by dividing said capacity of each workload type on each system by said total of service units of each workload type and obtaining the minimum value of said dispatcher's relative share of each system;
calculating a relative queue length (V, 424, 425, 426) for each system by dividing a queue length (q, 421, 422, 423) of said workload items for each workload type on each system by said capacity of each workload type on each system;
calculating said dispatcher's share (D) for each system by combining said minimum value and a first function of said relative queue length using an arithmetic operation,
wherein said first function of said relative queue length comprises calculating an inverse of one plus a maximum of said relative queue length and said arithmetic operation is a multiplication.

2. A method as in any preceding claim, wherein said dispatcher's share (R) is normalized by dividing said dispatcher's share by an addition of all dispatcher's shares of all systems.

3. A method as in any preceding claim, wherein said first, second and third workload type are CP, zAAP and zIIP.

4. A method as in any preceding claim, wherein said minimum value is normalized by dividing said minimum value by an addition of all minimum value of all systems.

5. A method as in any preceding claim, wherein said arbitrator distributes said flow of workload items to other dispatchers in other systems.

6. A computer program product stored on a computer usable medium, comprising computer readable program means for causing a computer to perform a method according to any of the preceding claims 1 to 5 when said program is run on said computer.

7. A data processing system for workload management operable to perform according to any of the preceding claims 1 to 5.

## Patentansprüche

1. Verfahren (300) in einer Einheit zur Arbeitslast-Verwaltung zum Berechnen eines Anteils eines Dispatcher (D) an der relativen Anzahl von Arbeitslast-Elementen, die ein Dispatcher empfangen sollte, wobei die Einheit zur Arbeitslast-Verwaltung (101) mit einem Entscheider (102) verbunden ist, wobei der Entscheider (102) mit einer Vielzahl von Systemen (117 bis 119) verbunden ist und wobei jedes System einen Dispatcher (103) umfasst und jeder Dispatcher (103) mit einer Vielzahl von Ausführungseinheiten (106 bis 114) verbunden ist, wobei der Entscheider (102) zum Empfangen und Verteilen eines Flusses von Arbeitslast-Elementen (115) an die Dispatcher (103 bis 105) und die Ausführungseinheiten (106 bis 114) zum Ausführen der Arbeitslast-Elemente (115) geeignet ist, wobei es sich bei den Arbeitslast-Elementen (115) um einen ersten, einen zweiten oder einen dritten Typ handelt, wobei das Verfahren die Schritte umfasst:
Lesen (301) eines Gesamtwerts von Diensteinheiten (W, 407) für jeden Arbeitslast-Typ über die Vielzahl von Systemen (117 bis 119) aus einem Speicher (116), wobei es sich bei den Diensteinheiten um einen Wert zum Messen der CPU-Auslastung in einem Zeitintervall handelt;
Lesen (302) eines Kapazitätswerts (cap, 408, 409, 410) für jeden Arbeitslast-Typ auf jedem System (SYS) in der Vielzahl von Systemen (117 bis 119) aus dem Speicher, wobei der Kapazitätswert einen Höchstwert von Diensteinheiten angibt, die ein System in dem Zeitintervall ausführen kann;
Berechnen (303) eines ersten, eines zweiten und eines dritten relativen Dispatcher-Anteils (R) durch Teilen der Kapazität jedes Arbeitslast-Typs auf jedem System durch den Gesamtwert an Diensteinheiten jedes Arbeitslast-Typs und Erhalten des kleinstmöglichen Werts des relativen Dispatcher-Anteils jedes Systems;
Berechnen einer relativen Warteschlangen-Länge (V, 424, 425, 426) für jedes System durch Teilen einer Warteschlangen-Länge (q, 421, 422, 423) der Arbeitslast-Elemente für jeden Arbeitslast-Typ auf jedem System durch die Kapazität jedes Arbeitslast-Typs auf jedem System;
Berechnen des Dispatcher-Anteils (D) für jedes System durch Verknüpfen des kleinstmöglichen Werts und einer ersten Funktion der relativen Warteschlangen-Länge mit einer arithmetischen Operation,
wobei die erste Funktion der relativen Warteschlangen-Länge ein Berechnen eines Kehrwerts von 1 plus einem höchstmöglichen Wert der relativen Warteschlangen-Länge umfasst und wobei es sich bei der arithmetischen Operation um eine Multiplikation handelt.

2. Verfahren nach einem der vorhergehenden Ansprüche, wobei der Dispatcher-Anteil (R) durch Dividieren des Dispatcher-Anteils durch eine Summe aller Dispatcher-Anteile aus allen Systemen normalisiert wird.

3. Verfahren nach einem der vorhergehenden Ansprüche, wobei es sich bei dem ersten, zweiten und dritten Arbeitslast-Typ um CP, zAAP und zIIP handelt.

4. Verfahren nach einem der vorhergehenden Ansprüche, wobei der kleinstmögliche Wert durch Dividieren des kleinstmöglichen Werts durch eine Summe aller kleinstmöglichen Werte von allen Systemen normalisiert wird.

5. Verfahren nach einem der vorhergehenden Ansprüche, wobei der Entscheider den Fluss von Arbeitslast-Elementen an andere Dispatcher in anderen Systemen verteilt.

6. Computerprogramm-Produkt, das auf einem von einem Computer verwendbaren Medium gespeichert ist und computerlesbare Programmmittel zum Veranlassen eines Computers umfasst, ein Verfahren nach einem der vorhergehenden Ansprüche 1 bis 5 auszuführen, wenn das Programm auf dem Computer ausgeführt wird.

7. Datenverarbeitungssystem zur Arbeitslast-Verwaltung, das zum Ausführen nach einem der vorhergehenden Ansprüche 1 bis 5 betreibbar ist.

## Revendications

1. Procédé de calcul (300), dans un gestionnaire de charge de travail (101), d'une part d'un expéditeur (D) dans la quantité relative d'éléments de charge de travail qu'un expéditeur devrait recevoir, ledit gestionnaires de charge de travail (101) étant connecté à un arbitre (102), ledit arbitre (102) étant connecté à une pluralité de systèmes (117 à 119), chaque système comprenant un expéditeur (103), chaque expéditeur (103) étant connecté à une pluralité d'unités d'exécution (106 à 114), ledit arbitre (102) étant adapté pour recevoir et distribuer un flux d'éléments de charge de travail (115) vers lesdits expéditeurs (103 à 105), lesdites unités d'exécution (106 à 114) étant adaptées pour exécuter lesdits éléments de charge de travail (115), lesdits éléments de charge de travail (115) étant au moins un d'un premier, un second ou un troisième type, ledit procédé comprenant les étapes consistant à :
lire (301) un total d'unités de service (W,407) pour chaque type de charge de travail au travers de ladite pluralité de systèmes (117 à 119) dans une mémoire (116), lesdites unités de service étant une valeur pour mesurer une consommation CPU dans un intervalle de temps ;
lire (302) une valeur de capacité (cap, 408, 409, 410) pour chaque type de charge de travail sur chaque système (SYS) de ladite pluralité des systèmes (117 à 119) dans ladite mémoire, ladite valeur de capacité indiquant un maximum d'unités de service qu'un système peut exécuter dans ledit intervalle de temps ;
calculer (303) une première, deuxième et troisième part relative (R) d'un expéditeur en divisant ladite capacité de chaque type de charge de travail sur chaque système par ledit total d'unités de service et chaque type de charge de travail et obtenant la valeur minimale de ladite part relative d'un expéditeur de chaque système ;
calculer une longueur de file d'attente relative (V, 424, 425, 426) pour chaque système en divisant une longueur de file d'attente (q, 421, 422, 423) desdits éléments de charge de travail pour chaque type de charge de travail sur chaque système par ladite capacité de chaque type de charge de travail sur chaque système ;
calculer ladite part d'un expéditeur (D) pour chaque système en combinant ladite valeur minimale et une première fonction de ladite longueur de file d'attente relative en utilisant une opération arithmétique,
dans lequel ladite première fonction de ladite longueur de file d'attente relative comprend de calculer un inverse de un plus un maximum de ladite longueur de file d'attente relative et ladite opération arithmétique est une multiplication.

2. Procédé selon l'une quelconque des revendications précédentes, dans lequel ladite part d'un expéditeur (R) est normalisée en divisant ladite part d'un expéditeur par une addition de toutes les parts d'un expéditeur de tous les systèmes.

3. Procédé selon l'une quelconque des revendications précédentes, dans lequel ledit premier, deuxième et troisième type de charge de travail sont CP, zAAP et zIIP.

4. Procédé selon l'une quelconque des revendications précédentes, dans lequel ladite valeur minimale est normalisée en divisant ladite valeur minimale par une addition de toutes les valeurs minimales de tous les systèmes.

5. Procédé selon l'une quelconque des revendications précédentes, dans lequel ledit arbitre distribue ledit flux d'éléments de charge de travail à d'autres expéditeurs dans d'autres systèmes.

6. Produit de programmes informatiques mémorisé sur un support utilisable par un ordinateur, comprenant un moyen de programme lisible par ordinateur pour amener un ordinateur à exécuter un procédé selon l'une quelconque des revendications précédentes 1 à 5 quand ledit programme est exécuté sur ledit ordinateur.

7. Système de traitement de données pour une gestion de charge de travail opérationnelle afin de fonctionner selon l'une quelconque des revendications précédentes 1 à 5.
